# EUROPEAN PATENT SPECIFICATION

(11) **EP 2 586 887 B1**
(45) Date of publication and mention of the grant of the patent: **26.08.2020**
(21) Application number: 12190038.5
(22) Date of filing: 25.10.2012
(51) Int. Cl.: C22F 1/10

(54) **Method for manufacturing components or coupons made of a high temperature superalloy**
Verfahren zur Herstellung von Komponenten oder Coupons aus einer Hochtemperatur-Superlegierung
Procédé de fabrication de composants ou de coupons constitués d'un superalliage à haute température

(30) Priority: 31.10.2011 CH 17542011
(43) Date of publication of application: 01.05.2013
(73) Proprietor: Ansaldo Energia IP UK Limited, London W1G 9DQ (GB)
(72) Inventor: Rickenbacher, Lukas Emanuel, 4053 Basel (CH); Etter, Thomas, 5037 Muhen (CH)
(74) Representative: Bernotti, Andrea

(56) References cited:
- EP-A1- 1 992 709
- US-A- 3 765 958
- US-A- 4 795 507
- GUO W M ET AL: "Microstructure, Properties and Heat Treatment Process of Powder Metallurgy Superalloy FGH95", JOURNAL OF IRON AND STEEL RESEARCH INTERNATIONAL, GANGTIE YANJIU XUEBAO, CN, vol. 13, no. 5, 1 September 2006 (2006-09-01), pages 65-68, XP022933576, ISSN: 1006-706X, DOI: 10.1016/S1006-706X(06)60097-6 [retrieved on 2006-09-01]
- OJO O A ET AL: "On incipient melting during high temperature heat treatment of cast Inconel 738 superalloy", JOURNAL OF MATERIALS SCIENCE, KLUWER ACADEMIC PUBLISHERS, BO, vol. 39, no. 24, 1 December 2004 (2004-12-01), pages 7401-7404, XP019210101, ISSN: 1573-4803, DOI: 10.1023/B:JMSC.0000048761.32712.EB
- SANTOS E C ET AL: "Rapid manufacturing of metal components by laser forming", INTERNATIONAL JOURNAL OF MACHINE TOOLS AND MANUFACTURE, ELSEVIER, US, vol. 46, no. 12-13, 1 October 2006 (2006-10-01), pages 1459-1468, XP024902437, ISSN: 0890-6955, DOI: 10.1016/J.IJMACHTOOLS.2005.09.005 [retrieved on 2006-10-01]
- LIU F ET AL: "Microstructure and residual stress of laser rapid formed Inconel 718 nickel-base superalloy", OPTICS AND LASER TECHNOLOGY, ELSEVIER SCIENCE PUBLISHERS BV., AMSTERDAM, NL, vol. 43, no. 1, 1 February 2011 (2011-02-01), pages 208-213, XP027174940, ISSN: 0030-3992 [retrieved on 2010-07-14]
- DINDA G P ET AL: "Laser aided direct metal deposition of Inconel 625 superalloy: Microstructural evolution and thermal stability", MATERIALS SCIENCE AND ENGINEERING A: STRUCTURAL MATERIALS: PROPERTIES, MICROSTRUCTURES AND PROCESSING, ELSEVIER BV, NL, vol. 509, no. 1-2, 25 May 2009 (2009-05-25), pages 98-104, XP026035880, ISSN: 0921-5093, DOI: 10.1016/J.MSEA.2009.01.009 [retrieved on 2009-01-16]
- FUDE WANG: "Mechanical property study on rapid additive layer manufacture HastelloyÂ TM X alloy by selective laser melting technology", THE INTERNATIONAL JOURNAL OF ADVANCED MANUFACTURING TECHNOLOGY, SPRINGER, BERLIN, DE, vol. 58, no. 5 - 8, 12 June 2011 (2011-06-12), pages 545-551, XP035002117, ISSN: 1433-3015, DOI: 10.1007/S00170-011-3423-2
- BALIKCI ERCAN ET AL: "Influence of various heattreatments on the microstructure of polycrystalline IN738LC", METALLURGICAL AND MATERIALS TRANSACTIONS A: PHYSICAL METALLURGY & MATERIALS SCIENCE, ASM INTERNATIONAL, MATERIALS PARK, OH, US, vol. 28 A, no. 10, 30 September 1997 (1997-09-30), pages 1993-2003, XP009505124, ISSN: 1073-5623

## Description

### BACKGROUND OF THE INVENTION

The present invention relates to the technology of superalloys. It refers to a method for manufacturing components or coupons made of a high temperature superalloy according to the preamble of claim 1.

### PRIOR ART

The influence of various heat treatments on an exemplary Ni-based and cast superalloy like IN738LC has been investigated in the past.

Durability of this superalloy is dependent on the strengthening of γ' precipitates (see for example E. Balikci et al. Influence of various heat treatments on the microstructure of polycrystalline IN738LC, Metallurgical and Materials Transactions A Vol. 28, No. 10, 1993-2003, Oct. 1997). The 1120°C/2h/accelerated air-cooled (AAC) solution treatment, given in the literature, already produces a bimodal precipitate microstructure, which is, thus, not an adequate solutionizing procedure to yield a single-phase solid solution in the alloy at the outset. A microstructure with fine precipitates develops if solutionizing is carried out under 1200°C/4h/AAC conditions. Agings at lower temperatures after 1200°C/4 h/AAC or 1250°C/4 h/AAC or WQ conditions yield analogous microstructures. Agings below 950°C for 24 hours yield nearly spheroidal precipitates, and single aging for 24 hours at 1050 °C or 1120 °C produces cuboidal precipitates.

Two different γ' precipitate growth processes are observed: merging of smaller precipitates to produce larger ones (in duplex precipitate-size microstructures) and growth through solute absorption from the matrix.

However, a superalloy of this kind, which is manufactured by a powder-based additive manufacturing process, behaves different with regard to its mechanical properties due to a different microstructure.

The prior art document DINDA G P ET AL "Laser aided direct metal deposition of Inconel 625 superalloy: Microstructural evolution and thermal stability" (XP026035880) discloses a direct metal deposition technology which combines laser cladding with rapid prototyping into a solid freeform fabrication process that can be used to manufacture near net shape components from their CAD files.

### SUMMARY OF THE INVENTION

It is an object of the present invention to provide a method for manufacturing a component or coupon, i.e. a part of a component, made of a high temperature superalloy based on Ni or Co or Fe or combinations thereof by means of a powder-based additive manufacturing process, which is optimized with regard to achieving tailor-made mechanical properties.

This object is obtained by a method according to claim 1, which comprises the steps of
a) forming said component or coupon by means of a powder-based additive manufacturing process, wherein during said process the powder is completely melted and afterwards solidified; and
b) subjecting said formed component or coupon a heat treatment to optimize specific material properties; whereby
c) said heat treatment takes place at higher temperatures compared to cast components or coupons.

Said heat treatment improves specific material properties such as creep strength, low cycle fatigue behavior, etc., by optimizing said microstructure.

The invention thus relates to the heat treatment of materials/components/coupons made of Ni/Co/Fe-based superalloys produced by a powder-based additive manufacturing technology, such as SLM (Selective Laser Melting) or LMF (Laser Metal Forming) or EBM (Electron Beam Melting). These articles have different microstructures compared to conventionally cast material of the same alloy, for instance. This is primarily due to powder based article production and the inherent high cooling rates of the energy beam-material interaction in these processes. As a consequence, the material is very homogeneous with respect to chemical composition and principally free of segregations.

Due to the fact that Ni/Co/Fe-based superalloys produced by powder-based additive manufacturing technologies are generally free of residual eutectic contents, heat treatments at higher temperatures compared to cast components/coupons can be realized to achieve a higher solution degree without the risk of incipient melting. This allows an adjustment of the microstructure over a wide range, including grain size and precipitation optimization, leading to improved material properties. Furthermore, this allows tailoring the material properties to its specific application, which is very limited with conventional manufacturing methods such as casting. This can be used for modular part concept, where each segment are optimized according to their function, e.g. leading edges having improved LCF behaviour whereas thermally loaded areas having an increased creep strength.

Said high temperature material may be a Ni-based alloy, such as, but not limited to those known under their brand names Waspaloy, Hastelloy X, IN617, IN718, IN625, Mar-M247, IN100, IN738, IN792, Mar-M200, 81900, RENE 80, Alloy 713, Haynes 230, Haynes 282, and other derivatives.

Said high temperature material may, on the other hand, be a Co-based alloy, such as, but not limited to those known under their brand names FSX 414, X-40, X-45, MAR-M 509 or MAR-M 302.

Said high temperature material may be a Fe-based alloy, such as, but not limited to those known under their brand names A 286, Alloy 800 H, N 155, S 590, Alloy 802, Incoloy MA 956, Incoloy MA 957 or PM 2000.

Or, said high temperature material may be a superalloy based on more then one selected from the group of Fe, Ni, Co.

According to an embodiment of the invention said powder-based additive manufacturing process is one of Selective Laser Melting (SLM), Selective Laser Sintering (SLS) or Electron Beam Melting (EBM) comprising the following steps:
a) generating a three-dimensional model of said component or coupon;
b) calculating cross sections of said model by means of a slicing process;
c) providing an additive manufacturing machine with a machine control unit;
d) preparing the powders of said Ni or Co or Fe based superalloy, which are needed for the process,
e) passing to and storing in said machine control unit said calculated cross sections;
f) preparing a powder layer with a regular and uniform thickness on a substrate plate of said additive manufacturing machine or on a previously processed powder layer;
g) performing melting of said powder layer by scanning with an energy beam according to a cross section of said component stored in said control unit;
h) lowering the upper surface of the so formed cross section by one layer thickness; and
i) repeating steps f) to h) until reaching the last cross section of said three-dimensional model.

According to another embodiment of the invention a particle size distribution of said powder is adjusted to said layer thickness to achieve a good flowability, which is required for preparing powder layers with regular and uniform thickness.

According to another embodiment of the invention said powder consists of particles having a spherical shape.

Especially, the required particle size distribution of the powder is obtained by sieving and/or winnowing (air separation).

According to a further embodiment of the invention the powder or powders is (are) obtained by one of gas or water atomization, plasma-rotating-electrode process, mechanical milling or like powder-metallurgical processes.

According to another embodiment of the invention said powder-based additive manufacturing process is one of Laser Metal Forming (LMF), Laser Engineered Net Shape (LENS) or Direct Metal Deposition (DMD), and may use material in form of a wire instead of powder.

According to another embodiment of the invention a suspension is used instead of powder.

According to just another embodiment of the invention said superalloy comprises fine dispersed oxides, especially Y₂O₃, AlO₃ or ThO₂.

According to another embodiment of the invention said heat treatment is done in an equipment, which is used for forming said component or coupon.

Alternatively, said heat treatment may be done in an equipment, which is different from a component or coupon forming equipment.

According to a further embodiment of the invention said heat treatment is a combination of different individual heat treatments.

According to a different embodiment of the invention only part of said component or coupon is subjected to said heat treatment.

According to another embodiment of the invention said heat treatment comprises multiple steps, each such step representing a specific combination of heating rate, hold temperature, hold time and cooling rate.

Before and/or after each heat treatment step said component or coupon may be subjected to various other processing steps such as, but not limited to, machining, welding or brazing, to use the specific advantages of a specific microstructure, e.g. small grains, which are beneficial for welding.

Furthermore, at least one of said heat treatment steps may be conducted at a sufficient high temperature and for a hold time long enough to partially or completely dissolve certain constituents in a microstructure of said component or coupon, such as intermetallic phases, carbides or nitrides.

According to another embodiment of the invention at least one of said heat treatment steps is conducted at a sufficient high temperature and for a hold time long enough to coarsen grains being present within said component or coupon.

Said grain coarsening results in microstructure comparable to a conventionally cast, directionally solidified or single crystal microstructure known from casting.

Especially, prior to said grain coarsening, said component or coupon may be deformed or specifically positioned in a powder bed and scanned with a specific hatching strategy to introduce residual stresses leading to anisotropic grain elongation in said corresponding heat treatment step.

According to a further embodiment of the invention at least one of said heat treatment steps is conducted at a sufficient high temperature and for a hold time long enough to precipitate metal-carbides, metal-nitrides or metal-carbonitrides, such as but not limited to, M(C,N), M₆C, M₇C₃ or M₂₃C₆ (M being a metal).

Furthermore, at least one of said heat treatment steps may be conducted at a sufficient high temperature and for a hold time long enough to precipitate intermetallic phases such as, but not limited to, Ni₃(Al, Ti), known as gamma-prime, or Ni₃(Nb, Al, Ti), known as gamma-double-prime, or Ni₃Nb, known as delta-phase.

Especially, at least one of said heat treatment steps may be conducted at a sufficient high temperature and for a hold time long enough to precipitate metal-borides such as, but not limited to, M₃B₂, (M being a metal), to improve grain boundary strength.

At least one of said heat treatment steps is advantageously conducted at a sufficient high temperature and for a hold time long enough to modify the volume fraction, size, shape and distribution of said precipitations.

According to just another embodiment of the invention at least one of said heat treatment steps is conducted additionally under isostatic pressure, known as Hot Isostatic Pressing HIP, to further improve a microstructure of said component or coupon.

### BRIEF DESCRIPTION OF THE DRAWINGS

The present invention is now to be explained more closely by means of different embodiments and with reference to the attached drawings.
- Fig. 1: shows the result of an Electron Microprobe Analysis (EPMA) of an IN738LC specimen processed by Selective Laser Melting (SLM) at room temperature (RT);
- Fig. 2: shows the corresponding result of an Electron Microprobe Analysis (EPMA) of a reference IN738LC specimen that has been cast in the usual way;
- Fig. 3: shows the schematic °C(t) curve of a "reference" heat treatment of an SLM IN738LC specimen (Fig. 3(a)) and the resulting microstructure at 500 µm scale and 200 µm scale (Fig. 3(b), left and right picture);
- Fig. 4: shows the schematic °C(t) curve of a heat treatment modified according to the invention of an SLM IN738LC specimen (Fig. 4(a)) and the resulting microstructure at 500 µm scale and 200 µm scale (Fig. 4(b), left and right picture);
- Fig. 5-8: show the schematic °C(t) curves of four different heat treatment cycles according to the invention that have been used to treat four similar samples of an SLM IN738LC alloy;
- Fig. 9: shows the microstructure of the sample treated according to the °C(t) curve of Fig. 5 at 2 mm and 500 µm resolution;
- Fig. 10: shows the microstructure of the sample treated according to the °C(t) curve of Fig. 6 at 2 mm and 500 µm resolution;
- Fig. 11: shows the microstructure of the sample treated according to the °C(t) curve of Fig. 7 at 500 µm and 200 µm resolution;
- Fig. 12: shows the microstructure of the sample treated according to the °C(t) curve of Fig. 8 at 500 µm and 200 µm resolution;
- Fig. 13: shows in comparison the microstructure of the sample treated according to the °C(t) curve of Fig. 6 at 500 µm and 200 µm resolution (lower left and right picture) and the microstructure of the sample treated according to the reference tratment of Fig. 3 at 500 µm and 200 µm resolution (upper left and right picture); and
- Fig. 14: shows process steps of a partial heat treatment according to the invention to modify the properties of a component (turbine blade) in a specified region of said component.

### DETAILED DESCRIPTION OF DIFFERENT EMBODIMENTS OF THE INVENTION

Due to the fact that Ni/Co/Fe-based superalloys produced by powder-based additive manufacturing technologies are generally free of residual eutectic contents, heat treatments at higher temperatures compared to cast components/coupons can be realized to achieve a higher solution degree without the risk of incipient melting. This allows specially adjusted heat treatments to optimize specific material properties, such as creep strength or low cycle fatigue behaviour, in a very broad spectrum, not achievable up to the present day. This is beneficial for modular part concepts as well as for reconditioning with a coupon repair approach, where material properties tailored for specific locations/applications are requested.

Therefore, this disclosure includes the manufacturing of three-dimensional articles by powder-based additive manufacturing technologies consisting of a high temperature material followed by a specially adapted heat treatment resulting in an optimized microstructure and therefore increased material properties.

Said powder-based additive manufacturing technology may be Selective Laser Melting (SLM), Selective Laser Sintering (SLS), Electron Beam Melting (EBM), Laser Metal Forming (LMF), Laser Engineered Net Shape (LENS), Direct Metal Deposition (DMD), or like processes. During said process the powder is completely melted and afterwards solidified.

Said high temperature material may be a Ni-based alloy, such as, but not limited to Waspaloy, Hastelloy X, IN617, IN718, IN625, Mar-M247, IN100, IN738, IN792, Mar-M200, 81900, RENE 80, Alloy 713, Haynes 230, Haynes 282 and other derivatives.

Alternatively, said high temperature material may be a Co-based alloy, such as, but not limited to FSX 414, X-40, X-45, MAR-M 509 or MAR-M 302.

Alternatively, said high temperature material may be a Fe-based alloy, such as, but not limited to A 286, Alloy 800 H, N 155, S 590, Alloy 802, Incoloy MA 956, Incoloy MA 957 or PM 2000.

Alternatively, said high temperature material may be a superalloy based on combinations of at least two selected from the group of Fe, Ni, Co.

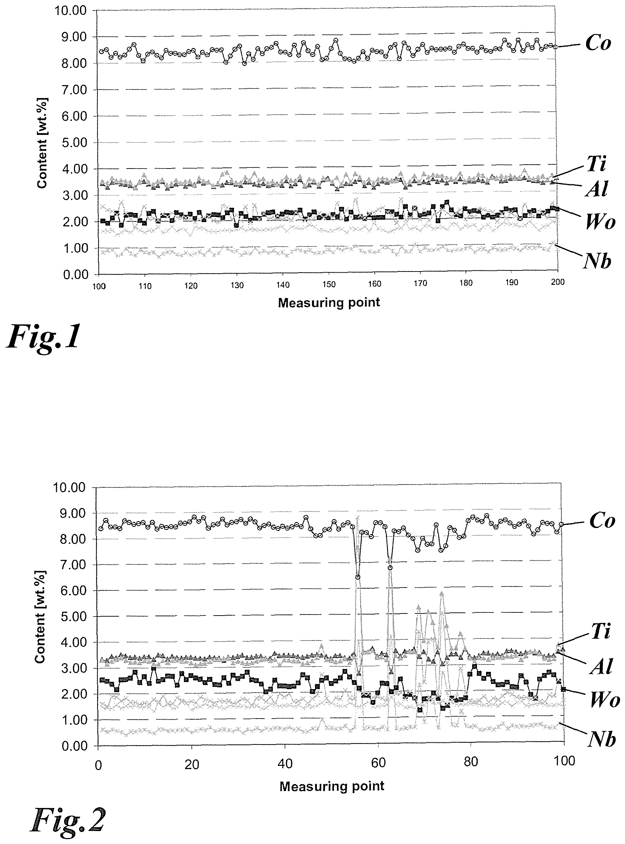

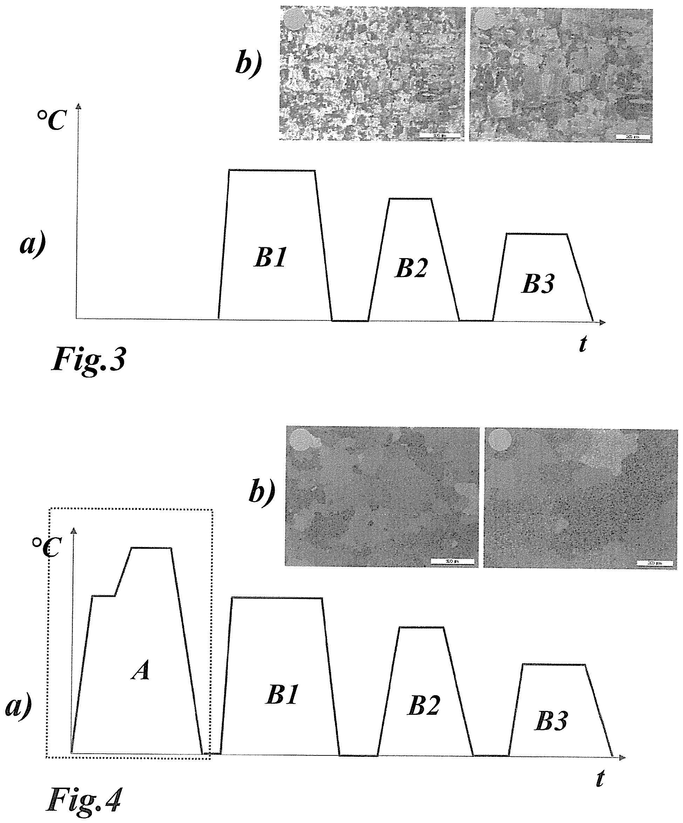

The invention will be explained in detail with regard to an IN738LC alloy (LC means Low Carbon). Fig. 1 shows the result of an Electron Microprobe Analysis (EPMA) of an IN738LC specimen processed by Selective Laser Melting (SLM) at room temperature (RT) (only some of the various elements of the alloy are labeled). For comparison, Fig. 2 shows the corresponding result of an Electron Microprobe Analysis (EPMA) of a reference IN738LC specimen that has been cast in the usual way. It is obvious by comparing Fig. 1 and Fig. 2 that the scattering/variation in the SLM specimen is substantially lower compared to the "cast reference", although no significant difference of the mean value can be seen between the SLM and the cast specimen. Especially, no significant depletion of y'-formers such as Al and Ti occurred during processing of the SLM specimen. According to the invention, such an SLM IN738LC specimen has been subjected to a heat treatment (Fig. 4(a)), which is a modification of the usual heat treatment (Fig. 3(a)), the modification comprising an initial high-temperature Solution Heat Treatment (SHT) step A, which is followed by three other (usual) heat treatment steps B1-B3 at lower temperatures.

As can be seen from the respective pictures of the microstructure (Fig. 3(b) and 4(b)), said modified heat treatment changes and optimizes the microstructure, thereby improving specific material properties such as creep strength, LCF behavior etc.. Especially, a significant grain coarsening takes place as a result of a modified heat treatment.

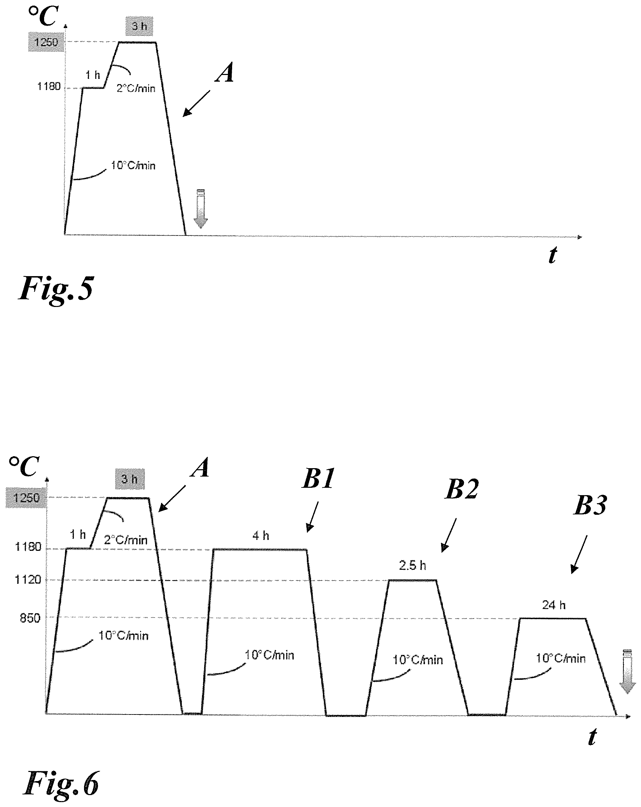

To investigate the influence of the solution temperature and hold time on the grain size, four different samples of an IN738LC material were subjected to different heat treatments as shown in Fig. 5-8. The heat treatment trials were done on small rectangular test pieces. It is important to note that the heat treatment trials were done in the "as-built" condition, e.g. without previous heat treatments (e.g. no Hot Isostatic Pressing treatment).

The treatments were as follows:

| | |
|---|---|
| First sample: | 1250°C/3h (Fig. 5) |
| Second sample: | 1250°C/3h + 1180°C/4h + 1120°C/2.5h + 850°C/24h (Fig. 6) |
| Third sample: | 1250°C/1h (Fig. 7) |
| Fourth sample: | 1260°C/1h (Fig. 8) |

For comparison, a further sample was subjected to a reference heat treatment according to Fig. 3 with heat treatment steps B1-B3 specified as

| | |
|---|---|
| B1 | HIP(1180°C/4h) |
| B2 | 1120°C/2.5h |
| B3 | 850°C/24h. |

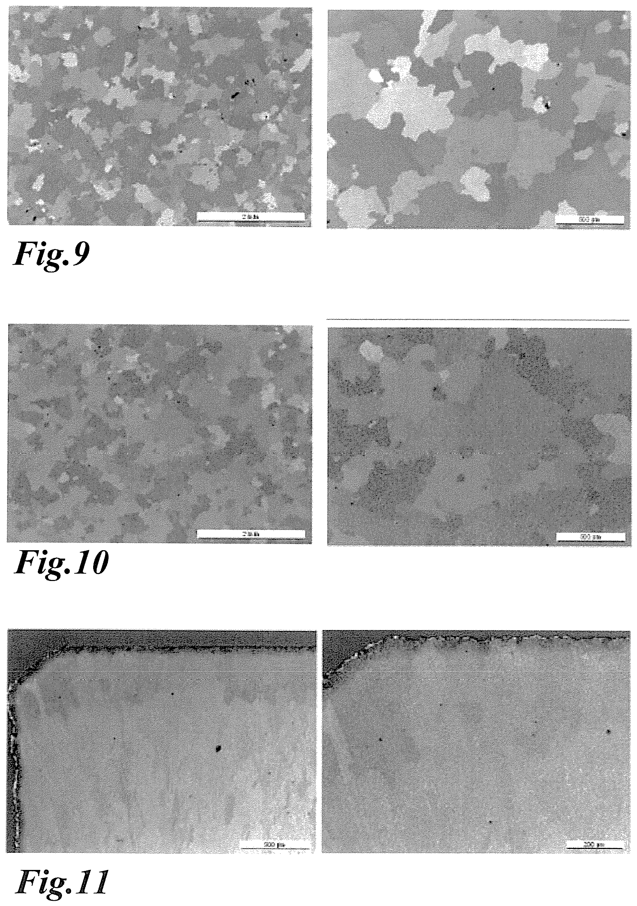

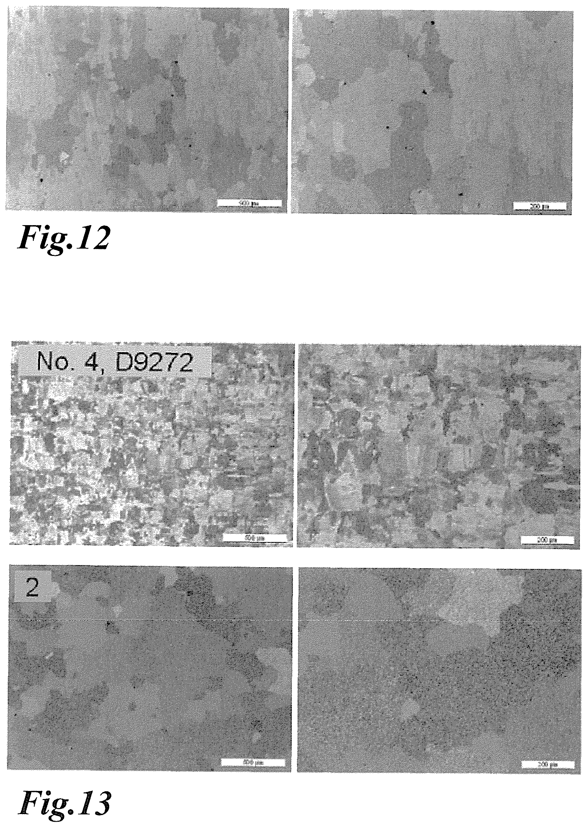

The resulting microstructure of the samples 1 and 2 being solution heat-treated at 1250°C/3h (Fig. 5, 6) is shown in the pictures of Fig. 9 and 10. As can be seen from Fig. 13, significant grain coarsening took place (lower left and right picture) in comparison to the reference heat treatment (upper left and right picture).

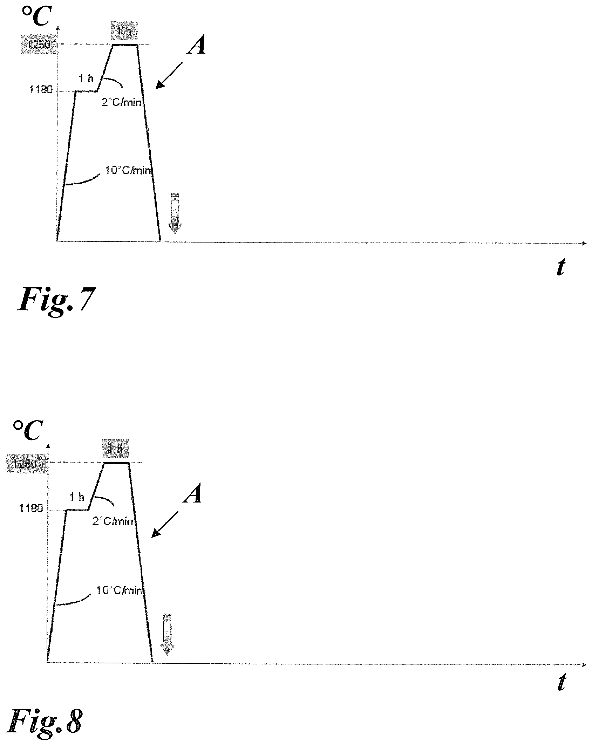

However, the hold-time of 1h at 1250°C and 1260°C according to Fig. 7 and 8, respectively, is not yet sufficient to achieve a fully re-crystallized/coarsened microstructure (see Fig. 11 and 12).

Furthermore, it is important to note that the γ' (gamma prime) precipitate size and morphology strongly depends on the cooling rates.

Grain boundary morphology and precipitates are important for good creep properties. Therefore, a conventionally cast IN738LC microstructure has been analyzed as well. As a result, carbide precipitates are found along the grain boundaries. In IN738LC mainly two types of carbides are present, the Ti(Ta, Nb)-rich MC type carbides, and the M₂₃C₆ carbides, especially rich in chromium.

In the "as-built" condition, carbide precipitates on the µm-scale were not found in material produced by selective laser melting (SLM). It is important to note that apart from the hardening γ' phase also minor fractions of MC and M₂₃C₆ carbides and also M₃B₂ borides are additional hardening precipitates, and are especially important for grain boundary strengthening.

In conclusion, the results show that grain coarsening of IN738LC produced by selective laser melting ("as-built" condition) can be achieved by a full solution heat treatment above the γ'-solvus temperature, e.g. for 3h at 1250°C.

The basic idea is to perform the heat treatment above the γ'-solvus temperature. Due to the fact that the SLM material is very homogeneous (see Electron Microprobe Analysis (Fig. 1), the risk of incipient melting is reduced. Pronounced compositional inhomogeneity as observed in cast components/coupons, e.g. micro-segregations due to the dendritic solidification, are not found in components/coupons produced by SLM so far.

Thus, Ni- and/or Co-based superalloys produced by SLM have the potential to be heat-treated at higher temperatures compared to conventionally cast material of the same composition. This is primarily due to powder based article production and the inherent high cooling rates of the energy beam-material interaction in the SLM process. The homogeneous composition of the SLM material, principally free of segregations, has been shown by Electron Microprobe Analysis (EPMA).

In order to achieve optimized microstructures with respect to grain size and grain boundary/(γ/γ') morphology, special heat treatments are used to obtain tailored material properties.

As has been explained with regard to Fig. 5-8 the heat treatment according to the invention can be a combination of different individual heat treatments (e.g. A, B1, B2, B3). Thus, said heat treatment may consist of multiple steps, each representing a specific combination of heating rate, hold temperature, hold time and cooling rate.

The heat treatment can be done in the manufacturing equipment or by means of independent equipment. The component or coupon to be manufactured can be subjected to said heat treatment either as a whole or only partially.

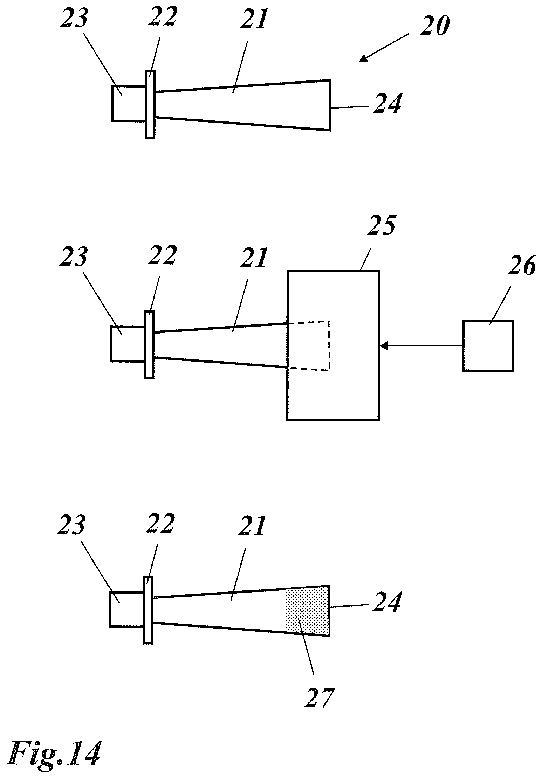

Fig. 14 shows process steps of a partial heat treatment according to the invention to modify the properties of a component (in this example a turbine blade) in a specified region of said component. The turbine blade 20 of Fig. 14 comprises an airfoil 21, a platform 22 and blade root 23. To optimize the mechanical behavior of e.g. a blade tip region, the blade 20 is introduced with this blade tip region into the interior of heat treatment device 25, which may be an oven. By means of suitable control 26 the temperature within the heat treatment device 25 is controlled in accordance with a heat treatment curve, as shown for example in Fig. 5-8. When the heat treatment has been done, the blade 20 has optimized properties in the region 27 of the blade tip.

In another example a coupon is manufactured by SLM and then heat treated according to the disclosure. This coupon is used for repairing a turbine blade by inserting it into the blade to be repaired followed by a heat treatment of the composed blade.

### LIST OF REFERENCE NUMERALS

- 20: turbine blade
- 21: airfoil
- 22: platform
- 23: root
- 24: tip
- 25: heat treatment device (e.g. oven)
- 26: control
- 27: optimized region

## Claims

1. Method for manufacturing a turbine blade (20) made of a high temperature superalloy based on Ni or Co or combinations thereof, comprising the steps of
a) forming said turbine blade (20) by means of a powder-based additive manufacturing process, wherein during said process the powder is completely melted and afterwards solidified; said turbine blade (20) comprising a tip (24), an airfoil (21), a platform (22) and blade root (23)
b1) subjecting said blade tip (24) to a heat treatment to optimize specific material properties;
**characterized in that**
c) said heat treatment of the step b1) takes place at a higher temperatures than the y' (gamma prime) solvus temperature.

2. Method according to claim 1, **characterized in that** said powder-based additive manufacturing process is one of Selective Laser Melting (SLM), Selective Laser Sintering (SLS) or Electron Beam Melting (EBM) comprising the following steps:
a) generating a three-dimensional model of said component or coupon;
b) calculating cross sections of said model by means of a slicing process;
c) providing an additive manufacturing machine with a machine control unit;
d) preparing the powders of said superalloy, which are needed for the process,
e) passing to and storing in said machine control unit said calculated cross sections;
f) preparing a powder layer with a regular and uniform thickness on a substrate plate of said additive manufacturing machine or on a previously processed powder layer;
g) performing melting of said powder layer by scanning with an energy beam according to a cross section of said component or coupon stored in said control unit;
h) lowering the upper surface of the so formed cross section by one layer thickness; and
i) repeating steps f) to h) until reaching the last cross section of said three-dimensional model.

3. Method according to claim 2, **characterized in that** a particle size distribution of said powder is adjusted to said layer thickness to achieve a good flowability, which is required for preparing powder layers with regular and uniform thickness.

4. Method according to claim 2 or 3, **characterized in that** said powder consists of grains having a spherical shape.

5. Method according to claim 3, **characterized in that** the required particle size distribution of the powder is obtained by sieving and/or winnowing (air separation).

6. Method according to claims 2 to 5, **characterized in that** the powder or powders is (are) obtained by one of gas or water atomization, plasma-rotating-electrode process, mechanical milling or like powder-metallurgical processes.

7. Method according to claim 1, **characterized in that** said powder-based additive manufacturing process is one of Laser Metal Forming (LMF), Laser Engineered Net Shape (LENS) or Direct Metal Deposition (DMD), and may use material in form of a wire instead of powder.

8. Method according to claim 1, **characterized in that** a suspension is used instead of powder.

9. Method according to one of the claims 1 to 8, **characterized in that** said superalloy comprises fine dispersed oxides, especially Y₂O₃, AlO₃ or ThO₂.

10. Method according to one of the claims 1 to 9, **characterized in that** said heat treatment is done in an equipment, which is used for forming said component or coupon.

11. Method according to one of the claims 1 to 9, **characterized in that** said heat treatment is done in an equipment, which is different from a component or coupon forming equipment.

12. Method according to one of the claims 1 to 11, **characterized in that** said heat treatment is a combination of different individual heat treatments.

13. Method according to one of the claims 1 to 12, **characterized in that** only part of said component or coupon is subjected to said heat treatment.

14. Method according to one of the claims 1 to 13, **characterized in that** said heat treatment comprises multiple steps, each such step representing a specific combination of heating rate, hold temperature, hold time and cooling rate.

15. Method according to claim 14, **characterized in that** before and/or after each heat treatment step said component or coupon is subjected to various other processing steps such as, but not limited to, machining, welding or brazing, to use the specific advantages of a specific microstructure, e.g. small grains, which are beneficial for welding.

16. Method according to claim 14 or 15, **characterized in that** at least one of said heat treatment steps is conducted at a sufficient high temperature and for a hold time long enough to partially or completely dissolve certain constituents in a microstructure of said component or coupon, such as intermetallic phases, carbides or nitrides.

17. Method according to one of the claims 14 to 16, **characterized in that** at least one of said heat treatment steps is conducted at a sufficient high temperature and for a hold time long enough to coarsen grains being present within said component or coupon.

18. Method according to claim 17, **characterized in that** prior to said grain coarsening, said component or coupon is deformed or specifically positioned in a powder bed and scanned with a specific hatching strategy to introduce residual stresses leading to anisotropic grain elongation in said corresponding heat treatment step.

19. Method according to one of the claims 14 to 18, **characterized in that** at least one of said heat treatment steps is conducted at a sufficient high temperature and for a hold time long enough to precipitate metal-carbides, metal-nitrides or metal-carbonitrides, such as but not limited to, M(C,N), M₆C, M₇C₃ or M₂₃C₆ (M being a metal).

20. Method according to one of the claims 14 to 19, **characterized in that** at least one of said heat treatment steps is conducted at a sufficient high temperature and for a hold time long enough to precipitate intermetallic phases such as, but not limited to, Ni₃(Al,Ti), known as gamma-prime, or Ni₃(Nb,Al,Ti), known as gamma-double-prime, or Ni₃Nb, known as delta-phase.

21. Method according to one of the claims 14 to 20, **characterized in that** at least one of said heat treatment steps is conducted at a sufficient high temperature and for a hold time long enough to precipitate metal-borides such as, but not limited to, M₃B₂, (M being a metal), to improve grain boundary strength.

22. Method according to one of the claims 19 to 21, **characterized in that** at least one of said heat treatment steps is conducted at a sufficient high temperature and for a hold time long enough to modify the volume fraction, size, shape and distribution of said precipitations.

23. Method according to one of the claims 14 to 22, **characterized in that** at least one of said heat treatment steps is conducted additionally under isostatic pressure, known as hot Isostatic pressing (HIP), to further improve a microstructure of said component or coupon.

## Patentansprüche

1. Verfahren zur Herstellung einer Turbinenschaufel (20), bestehend aus einer Hochtemperatur-Superlegierung, die auf Ni oder Co oder Kombinationen davon basiert, wobei das Verfahren folgende Schritte umfasst:
a) Formen der Turbinenschaufel (20) mithilfe eines pulverbasierten additiven Herstellungsverfahrens, wobei das Pulver während des Verfahrens vollständig geschmolzen wird und anschließend erstarrt; wobei die Turbinenschaufel (20) eine Spitze (24), ein Schaufelblatt (21), eine Plattform (22) und einen Schaufelfuß (23) umfasst;
b1) Wärmebehandlung der Schaufelspitze (24) zur Optimierung spezieller Materialeigenschaften;
**dadurch gekennzeichnet, dass**
c) die Wärmebehandlung in Schritt b1) bei einer Temperatur erfolgt, die höher ist als die γ'-(Gamma-Prime)-Solvus-Temperatur.

2. Verfahren nach Anspruch 1, **dadurch gekennzeichnet, dass** das pulverbasierte additive Herstellungsverfahren ein selektives Laserschmelzen (SLM), selektives Lasersintern (SLS) oder Elektronenstrahlschmelzen (EBM) ist, das folgende Schritte umfasst:
a) Herstellen eines dreidimensionalen Modells des Bauteils oder Coupons;
b) Berechnen der Querschnitte des Modells mithilfe eines Schneidprozesses;
c) Bereitstellen einer additiven Fertigungsmaschine mit einer Maschinensteuereinheit;
d) Herstellen der Pulver der Superlegierung, die für das Verfahren benötigt werden;
e) Eingabe und Speicherung der berechneten Querschnitte in der Maschinensteuereinheit;
f) Herstellen einer Pulverschicht mit einer gleichmäßigen, einheitlichen Dicke auf einer Substratplatte der additiven Fertigungsmaschine oder auf einer vorher verarbeiteten Pulverschicht;
g) Schmelzen der Pulverschicht mittels Scannen mit einem Energiestrahl entsprechend einem in der Steuereinheit gespeicherten Querschnitt des Bauteils oder Coupons;
h) Reduzieren der Oberfläche des auf diese Weise geformten Querschnitts um eine Schichtdicke;
i) Wiederholen der Schritte f) bis h), bis der letzte Querschnitt des dreidimensionalen Modells erreicht ist.

3. Verfahren nach Anspruch 2, **dadurch gekennzeichnet, dass** eine Korngrößenverteilung des Pulvers an die Schichtdicke angeglichen wird, um eine gute Fließfähigkeit zu erreichen, die zur Herstellung von Pulverschichten mit einer gleichmäßigen, einheitlichen Dicke notwendig ist.

4. Verfahren nach Anspruch 2 oder 3, **dadurch gekennzeichnet, dass** das Pulver aus kugelförmigen Körnern besteht.

5. Verfahren nach Anspruch 3, **dadurch gekennzeichnet, dass** die erforderliche Korngrößenverteilung des Pulvers mittels Sieben und/oder Windsichten (Lufttrennung) erreicht wird.

6. Verfahren nach Anspruch 2 bis 5, **dadurch gekennzeichnet, dass** das oder die Pulver mittels Gas- oder Wasserzerstäubung, PREP (Plasma Rotating Electrode Process), mechanischem Fräsen oder ähnlicher pulvermetallurgischer Verfahren hergestellt wird/werden.

7. Verfahren nach Anspruch 1, **dadurch gekennzeichnet, dass** das pulverbasierte additive Herstellungsverfahren ein Laser Metal Forming (LMF), Laser Engineering Net Shape (LENS) oder Laserauftragsschweißen (DMD) ist und dass Material in Form eines Drahtes, statt Pulver verwendet werden kann.

8. Verfahren nach Anspruch 1, **dadurch gekennzeichnet, dass** statt des Pulvers eine Suspension verwendet wird.

9. Verfahren nach einem der Ansprüche 1 bis 8, **dadurch gekennzeichnet, dass** die Superlegierung fein verteilte Oxide enthält, insbesondere Y₂O₃, AlO₃ oder ThO₂.

10. Verfahren nach einem der Ansprüche 1 bis 9, **dadurch gekennzeichnet, dass** die Wärmebehandlung in einer Vorrichtung erfolgt, die zur Formung des Bauteils oder Coupons verwendet wird.

11. Verfahren nach einem der Ansprüche 1 bis 9, **dadurch gekennzeichnet, dass** die Wärmebehandlung in einer Vorrichtung erfolgt, die sich von einer zur Formung des Bauteils oder Coupons verwendeten Vorrichtung unterscheidet.

12. Verfahren nach einem der Ansprüche 1 bis 11, **dadurch gekennzeichnet, dass** die Wärmebehandlung eine Kombination verschiedener einzelner Wärmebehandlungen ist.

13. Verfahren nach einem der Ansprüche 1 bis 12, **dadurch gekennzeichnet, dass** nur ein Teil des Bauteils oder Coupons der Wärmebehandlung unterzogen wird.

14. Verfahren nach einem der Ansprüche 1 bis 13, **dadurch gekennzeichnet, dass** die Wärmebehandlung mehrere Schritte umfasst, wobei jeder Schritt einer speziellen Kombination aus Aufheizrate, Haltetemperatur, Haltezeit und Kühlrate entspricht.

15. Verfahren nach Anspruch 14, **dadurch gekennzeichnet, dass** das Bauteil oder der Coupon vor und/oder nach jedem Wärmebehandlungsschritt verschiedenen anderen Verfahrensschritten unterzogen wird, darunter, jedoch ohne Einschränkung, der maschinellen Bearbeitung, dem Schweißen oder Hartlöten, um die besonderen Vorteile einer speziellen Mikrostruktur, z.B. kleine Körner, zu nutzen, die für das Schweißen vorteilhaft sind.

16. Verfahren nach Anspruch 14 oder 15, **dadurch gekennzeichnet, dass** mindestens einer der Wärmebehandlungsschritte bei einer ausreichend hohen Temperatur und für eine Haltezeit ausgeführt wird, die lang genug ist, um bestimmte Bestandteile in einer Mikrostruktur des Bauteils oder Coupons, wie etwa intermetallische Phasen, Carbide oder Nitride, vollständig oder teilweise aufzulösen.

17. Verfahren nach einem der Ansprüche 14 bis 16, **dadurch gekennzeichnet, dass** mindestens einer der Wärmebehandlungsschritte bei einer ausreichend hohen Temperatur und für eine Haltezeit ausgeführt wird, die lang genug ist, um die in dem Bauteil oder Coupon vorhandenen Körner zu vergröbern.

18. Verfahren nach Anspruch 17, **dadurch gekennzeichnet, dass** das Bauteil oder der Coupon vor der Körnervergröberung verformt wird oder in ein Pulverbett verbracht und mittels einer speziellen Hatching-Strategie gescannt wird, um eine Eigenspannung zu bewirken, die eine anisotrope Dehnung der Körner während des entsprechenden Wärmebehandlungsschrittes zur Folge hat.

19. Verfahren nach einem der Ansprüche 14 bis 18, **dadurch gekennzeichnet, dass** mindestens einer der Wärmebehandlungsschritte bei einer ausreichend hohen Temperatur und für eine Haltezeit ausgeführt wird, die lang genug ist, um Metallcarbide, Metallnitride oder Metallcarbonitride, wie etwa, jedoch ohne Einschränkung, M (C, N), M₆C, M₇C₃ oder M₂₃C₆ (wobei M ein Metall ist) abzuscheiden.

20. Verfahren nach einem der Ansprüche 14 bis 19, **dadurch gekennzeichnet, dass** mindestens einer der Wärmebehandlungsschritte bei einer ausreichend hohen Temperatur und für eine Haltezeit ausgeführt wird, die lang genug ist, um intermetallische Phasen, wie etwa, jedoch ohne Einschränkung, Ni₃(Al,Ti), bekannt als Gamma-Prime, oder Ni₃(Nb,Al,Ti), bekannt als Gamma-Double-Prime, oder Ni₃Nb, bekannt als Delta-Phase, abzuscheiden.

21. Verfahren nach einem der Ansprüche 14 bis 20, **dadurch gekennzeichnet, dass** mindestens einer der Wärmebehandlungsschritte bei einer ausreichend hohen Temperatur und für eine Haltezeit ausgeführt wird, die lang genug ist, um Metallboride, wie etwa, jedoch ohne Einschränkung, M₃B₂ (wobei M ein Metall ist), zur Erhöhung der Korngrenzenfestigkeit abzuscheiden.

22. Verfahren nach einem der Ansprüche 19 bis 21, **dadurch gekennzeichnet, dass** mindestens einer der Wärmebehandlungsschritte bei einer ausreichend hohen Temperatur und für eine Haltezeit ausgeführt wird, die lang genug ist, um den Volumenanteil, die Größe, Form und die Verteilung der Abscheidungen zu verändern.

23. Verfahren nach einem der Ansprüche 14 bis 22, **dadurch gekennzeichnet, dass** mindestens einer der Wärmebehandlungsschritte zusätzlich unter isostatischem Druck, bekannt als heißisostatisches Pressen (HIP), ausgeführt wird, um eine Mikrostruktur des Bauteils oder Coupons weiter zu verbessern.

## Revendications

1. Procédé de fabrication d'une aube de turbine (20) constituée d'un superalliage réfractaire à haute température basé sur du Ni ou du Co ou des combinaisons de ceux-ci, comprenant les étapes de
a) formation de ladite aube de turbine (20) au moyen d'un procédé de fabrication additive à base de poudre, où pendant ledit procédé la poudre est complètement fondue et ensuite solidifiée ; ladite aube de turbine (20) comprenant une pointe (24), une surface portante (21), une plate-forme (22) et un pied d'aube (23)
b1) soumission de ladite pointe d'aube (24) à un traitement thermique pour optimiser les propriétés spécifiques du matériau ;
**caractérisé en ce que**
c) le traitement thermique de l'étape b1) a lieu à des températures plus élevées que la température de solvus γ' (gamma prime).

2. Procédé selon la revendication 1, **caractérisé en ce que** ledit procédé de fabrication additive à base de poudre est un parmi la fusion sélective par laser (SLM), le frittage sélectif par laser (SLS) ou la fusion par faisceau d'électrons (EBM) comprenant les étapes suivantes :
a) génération d'un modèle tridimensionnel dudit composant ou coupon ;
b) calcul des sections transversales dudit modèle au moyen d'un procédé de découpage ;
c) fourniture d'une machine de fabrication additive avec une unité de commande de machine ;
d) préparation des poudres dudit superalliage, qui sont nécessaires pour le procédé ;
e) passage et stockage dans ladite unité de commande de machine desdites sections transversales calculées ;
f) préparation d'une couche de poudre d'une épaisseur régulière et uniforme sur une plaque de substrat de ladite machine de fabrication additive ou sur une couche de poudre préalablement formée ;
g) réalisation d'une fusion de ladite couche de poudre par balayage avec un faisceau d'énergie selon une section transversale dudit composant ou coupon stockée dans ladite unité de commande ;
h) réduction la surface supérieure de la section transversale ainsi formée d'une épaisseur de couche ; et
i) répétition des étapes f) à h) jusqu'à atteindre la dernière section transversale dudit modèle tridimensionnel.

3. Procédé selon la revendication 2, **caractérisé en ce que** la distribution de taille de particule de ladite poudre est ajustée à ladite épaisseur de couche pour obtenir une bonne fluidité, qui est nécessaire pour préparer des couches de poudre d'épaisseur régulière et uniforme.

4. Procédé selon la revendication 2 ou 3, **caractérisé en ce que** ladite poudre se compose de grains ayant une forme sphérique.

5. Procédé selon la revendication 3, **caractérisé en ce que** la distribution de taille de particules requise de la poudre est obtenue par tamisage et/ou vannage (séparation dans l'air).

6. Procédé selon les revendications 2 à 5, **caractérisé en ce que** la poudre ou les poudres sont obtenues par un parmi l'atomisation gazeuse ou aqueuse, le procédé à électrode tournante au plasma, le broyage mécanique ou des procédés similaires de métallurgie des poudres.

7. Procédé selon la revendication 1, **caractérisé en ce que** ledit procédé de fabrication additive à base de poudre est un parmi la formation de métal au laser (LMF), le façonnage net par laser (LENS) ou le dépôt de métal direct (DMD), et peut utiliser un matériau sous la forme d'un fil à la place d'une poudre.

8. Procédé selon la revendication 1, **caractérisé en ce qu'**une suspension est utilisée à la place d'une poudre.

9. Procédé selon l'une des revendications 1 à 8, **caractérisé en ce que** ledit superalliage comprend des oxydes dispersés fins, en particulier Y₂O₃, AlO₃ ou ThO₂.

10. Procédé selon l'une des revendications 1 à 9, **caractérisé en ce que** ledit traitement thermique est réalisé dans un équipement, qui est utilisé pour la formation dudit composant ou coupon.

11. Procédé selon l'une des revendications 1 à 9, **caractérisé en ce que** ledit traitement thermique est réalisé dans un équipement, qui est différent d'un équipement de formation de composant ou de coupon.

12. Procédé selon l'une des revendications 1 à 11, **caractérisé en ce que** ledit traitement thermique est une combinaison de différents traitements thermiques individuels.

13. Procédé selon l'une des revendications 1 à 12, **caractérisé en ce que** seulement une partie dudit composant ou coupon est soumise audit traitement thermique.

14. Procédé selon l'une des revendications 1 à 13, **caractérisé en ce que** ledit traitement thermique comprend de multiples étapes, chacune de ces étapes représentant une combinaison spécifique de vitesse de chauffage, température de maintien, temps de maintien et vitesse de refroidissement.

15. Procédé selon la revendication 14, **caractérisé en ce qu'**avant et/ou après chaque étape de traitement thermique, ledit composant ou coupon est soumis à diverses autres étapes de traitement telles que, mais sans s'y limiter, l'usinage, le soudage ou le brasage, pour utiliser les avantages spécifiques d'une microstructure spécifique, par exemple de petits grains, qui sont bénéfiques pour le soudage.

16. Procédé selon la revendication 14 ou 15, **caractérisé en ce qu'**au moins une desdites étapes de traitement thermique est réalisée à une température suffisamment élevée et pendant un temps de maintien suffisamment long pour dissoudre partiellement ou totalement certains constituants dans une microstructure dudit composant ou coupon, tels que des phases intermétalliques, des carbures ou des nitrures.

17. Procédé selon l'une des revendications 14 à 16, **caractérisé en ce qu'**au moins une desdites étapes de traitement thermique est réalisée à une température suffisamment élevée et pendant un temps de maintien suffisamment long pour que des grains grossis soient présents dans ledit composant ou coupon.

18. Procédé selon la revendication 17, **caractérisé en ce qu'**avant ledit grossissement des grains, ledit composant ou coupon est déformé ou positionné spécifiquement dans un lit de poudre et balayé avec une stratégie de hachurage spécifique pour introduire des contraintes résiduelles conduisant à un allongement anisotrope des grains dans ladite étape de traitement thermique correspondante.

19. Procédé selon l'une des revendications 14 à 18, **caractérisé en ce qu'**au moins une desdites étapes de traitement thermique est réalisée à une température suffisamment élevée et pendant un temps de maintien suffisamment long pour faire précipiter les carbures métalliques, les nitrures métalliques ou les carbonitrures métalliques, tels que, mais sans s'y limiter, M(C,N), M₆C, M₇C₃ ou M₂₃C₆ (M étant un métal).

20. Procédé selon l'une des revendications 14 à 19, **caractérisé en ce qu'**au moins une desdites étapes de traitement thermique est réalisée à une température suffisamment élevée et pendant un temps de maintien suffisamment long pour faire précipiter les phases intermétalliques telles que, mais sans s'y limiter, Ni₃(Al, Ti), connu sous le nom de gamma prime, ou Ni₃(Nb,Al, Ti), connu sous le nom de gamma double prime, ou Ni₃Nb, connu sous le nom de phase delta.

21. Procédé selon l'une des revendications 14 à 20, **caractérisé en ce qu'**au moins une desdites étapes de traitement thermique est réalisée à une température suffisamment élevée et pendant un temps de maintien suffisamment long pour faire précipiter les borures métalliques tels que, mais sans s'y limiter, M₃B₂ (M étant un métal), pour améliorer la résistance des joints de grains.

22. Procédé selon l'une des revendications 19 à 21, **caractérisé en ce qu'**au moins une desdites étapes de traitement thermique est réalisée à une température suffisamment élevée et pendant un temps de maintien suffisamment long pour modifier la fraction volumique, la taille, la forme et la distribution desdites précipitations.

23. Procédé selon l'une des revendications 14 à 22, **caractérisé en ce qu'**au moins une desdites étapes de traitement thermique est réalisée en outre sous pression isostatique, connue comme étant la compression isostatique à chaud (CIP), pour davantage améliorer une microstructure dudit composant ou coupon.
